**Europäisches Patentamt**

**European Patent Office**

**Office européen des brevets**

(19)

(11) Veröffentlichungsnummer : **0 153 972**
**B1**

(12) **EUROPÄISCHE PATENTSCHRIFT**

(45) Veröffentlichungstag der Patentschrift :
27.05.87

(51) Int. Cl.⁴ : **B 01 D 29/24**, B 01 D 37/02,
B 01 D 29/38, F 26 B 5/04

(21) Anmeldenummer : **84102502.6**

(22) Anmeldetag : **08.03.84**

(54) **Verfahren und Vorrichtung zur Reinigung von Filterelementen, insbesondere Filterkerzen.**

(43) Veröffentlichungstag der Anmeldung :
**11.09.85 Patentblatt 85/37**

(45) Bekanntmachung des Hinweises auf die Patenterteilung : **27.05.87 Patentblatt 87/22**

(84) Benannte Vertragsstaaten :
**AT BE CH DE FR GB IT LI NL SE**

(56) Entgegenhaltungen :
FR-A- 1 035 865
FR-A- 2 251 349
GB-A- 1 020 734
US-A- 1 859 282
US-A- 2 624 955

(73) Patentinhaber : **Schumacher, Heinz**
**Höperfeld 26**
**D-2050 Hamburg 80 (DE)**

(72) Erfinder : **Schumacher, Heinz**
**Höperfeld 26**
**D-2050 Hamburg 80 (DE)**

(74) Vertreter : **Glaeser, Joachim, Dipl.-Ing. et al**
**Dr. M. Kohler, Dipl.-Ing. J. Glaeser Königstrasse 28**
**D-2000 Hamburg 50 (DE)**

Jouve, 18, rue St-Denis, 75001 Paris, France

## Beschreibung

Die Erfindung betrifft ein Verfahren und eine Vorrichtung zur schnellen Reinigung von Filterelementen, insbesondere von Filterkerzen, bei denen Lösungen von organischen Stoffen in organischen Lösemitteln, die feinteilige, hochdisperse Schwebstoffe als Verunreinigungen enthalten unter Druck und Ausbildung eines Filterkuchens von diesem befreit und in kürzester Zeit einem erneuten Einsatz zugeführt werden können.

Lösungen dieser Art fallen z. B. bei der Extraktion von Fetten und Ölen mit Hilfe organischer Lösemittel an. Weiter treten derartige Lösungen in vielen Bereichen der organischen Chemie auf, so z. B. bei der Aufbereitung von Erdöl, bei der Herstellung von Papier und Cellulose, der Gewinnung von Farbstoffen, Arzneimitteln, Kunststoffvorprodukten, Säften u. a.

Neben den sogenannten Druckblattfiltern, Scheibenfiltern, Filterpressen usw. haben sich in ganz besonderem Maße Kerzenfilter bewährt, wenn die verunreinigenden Schwebstoffe und evtl. das Filterhilfsmaterial ausreichende Oberflächencharakteristik aufweisen, damit ein möglichst schneller Übergang der Lösung aus der Trübe in den die Klare Lösung aufnehmenden Innenraum der Filterelemente gewährleistet ist.

Ein besonderer Vorteil von Kerzenfiltern bei der Filtration großer Flüssigkeitsmengen je Oberflächeneinheit ist immer dann gegeben, wenn die Lösung hydrophoben Charakter und niedrigen Trübstoffanteil aufweist. Die preiswerte Herstellung von Kerzenfiltern bei relativ großer Filterfläche auf kleinstem Raum macht sie schon aus diesem Grunde zu einem unentbehrlichen Hilfsmittel der chemischen Verfahrenstechnik.

Kerzenfilter werden bevorzugt als Druckfilter betrieben, d. h., die zu filtrierende Trübe wird unter Druck gegen die (äußere) Oberfläche der Filterelemente geschickt, wobei die abzutrennenden Verunreinigungen auf der Filteroberfläche als sogenannter Filterkuchen zurückgehalten werden, während die klare Lösung aus dem Innern der Kerzen abgezogen wird.

Mehrfach-Kerzenfilter können bis 300 m² (und mehr) Filterfläche aufweisen, die in Druckbehältern mit 100 bar und mehr beaufschlagt werden.

Vielfach arbeiten Kerzenfilter nach dem Prinzip der Anschwemmfiltration, d. h., es wird die zu filtrierende Trübe entweder mehrfach durch die Filtereinheiten im Kreis geführt bis sich auf der Oberfläche der Filterkerzen ein Filterbett aus Trübmaterial ausgebildet hat, das dann seinerseits als Filterhilfsmittel wirkt, oder man setzt der zu filtrierenden Trübe ein sogenanntes Filterhilfsmittel zu, das seinerseits das Filterbett auf der Kerzenoberfläche aufbaut.

Kerzenfilter sind immer dann ein echtes technisches Hilfsmittel, wenn sich der auf der Kerzenoberfläche aus Filtermaterial und Trübstoffen gebildete Filterkuchen leicht entfernen läßt, ohne daß hierzu die Filtereinheit geöffnet oder sogar demontiert werden muß.

Es ist jedoch bekannt, daß viele, aus einer Trübe abzuscheidende Stoffe die Eigenschaft aufweisen, nur äußerst schwierig von der Filteroberfläche abzufallen bzw. von dieser abgetrennt werden können. Oft löst sich der Filterkuchen nur teilweise oder schichtweise von der Filteroberfläche ab, wodurch beim darauffolgenden Filtrationszyklus entweder nur ein Teilbereich der Filteroberfläche zur Verfügung steht, oder die Filtrationskapazität schon nach Ausbildung einer neuen, dünnen Kuchendicke erschöpft ist.

Es ist Aufgabe der Erfindung, die dargelegten Schwierigkeiten beim Abtrennen des Filterkuchens von der Oberfläche von Kerzenfiltern insgesamt zu beheben und dadurch die Kapazität von Kerzenfiltern (in der Zeiteinheit) zu steigern.

Die US-A-4 217 700 beschreibt bereits ein Verfahren zur Reinigung von Filterkerzen, bei dem der auf der (äußeren) Kerzenoberfläche gebildete Filterkuchen durch Druckluft im Gegenstrom, also von innen nach außen, gelockert und abgestoßen wird.

Aus der AT-A-211 329 ist eine Anlage zur Rückspülung von reihenweise angeordneten Filterkerzen bekannt, die stehend auf Sammelrohren befestigt sind, die ihrerseits beidseitig waagerecht durch die Behälterwand des Trübekessels geführt sind. Die beidseitige Durchführung der Sammelrohre ist äußerst aufwendig, wobei zusätzlich zu den vielen Kesselbohrungen jedes Sammelrohr mit zwei Absperreinheiten versehen sein muß, was eine Vielzahl von Ventilen und sonstigen Armaturen erforderlich macht.

Die EP-A-70 589 beschreibt ein rückspülbares Kerzenanschwemmfilter, bei dem das Filtergehäuse in mindestens zwei Kammern unterteilt ist, die senkrecht untereinander Überlaufschächte in Verbindung aufweisen. Die Rückspülung erfolgt durch Waschflüssigkeit, die über geeignete Stutzen direkt unterhalb der Überlaufschächte zugegeben wird. Die Überlaufschächte werden durch Trennwände gebildet, wobei die dem Trüblauf zugewandte Trennwand in einem bestimmten Abstand vom Behälterboden entfernt angebracht ist und in ihrem oberen Teil über das Flüssigkeitsniveau hinaus in den Gasraum führt. Die Waschflüssigkeit wird über die Zuführungsschächte zusammen mit den von den Filterelementen abgeworfenen Feststoffen in den Schächten von unten nach oben geführt, wobei sie gleichzeitig gewaschen und über ein Überlaufwehr in eine weitere Filterkammer gefördert werden.

Auch bei diesem bekannt gewordenen Verfahren wird durch Gegenstromspülung mit Waschflüssigkeit und ggf. Druckgas gearbeitet. Abgesehen davon, daß die Wasch- bzw. Spülflüssigkeit einen erheblichen zusätzlichen Ballast für die Anlage darstellt — der ja wieder aufbereitet werden muß — fällt der Filterkuchen grundsätzlich mit hohem Flüssigkeitsgehalt an, der bis zu 60 % und mehr betragen kann. Das Abstoßen durch Druckgas verringert darüberhinaus die Lebensdauer der Kerzen.

In der DE-C-10 07 294 wird vorgeschlagen, mit Hilfe einer pulsierenden Bewegung durch Druckstöße den Filtrationsvorgang an Kerzenfiltern zu erhöhen. Hierzu sind die Filterkörper in Richtung ihrer Längsachse elastisch ausgebildet, sodaß in dieser Richtung beim Rückspülen unter der Einwirkung rasch wechselnden Drucks eine sogenannte atmende Bewegung erzeugt wird, wodurch der Filterkuchen besser gelockert und abgeworfen wird.

Ein derartiges Verfahren bzw. die Anlage erfordert jedoch erhebliche technische Zusatzelemente wie Faltenbälge, elastische Einbauten in den Kerzen (Drahtwendeln), Zugfedern als Spannelemente usw., die den apparativen Aufbau der Gesamtanlage nicht nur komplizieren, sondern auch die Standzeiten des Systems insgesamt erheblich verkürzen.

Die EP-A-77 086 beschreibt ein Verfahren zur Reinigung von Kerzen-Anschwemmfiltern ohne Einsatz von Spülmitteln, wobei der auf der Kerzenoberfläche angesammelte Feststoffkuchen abwechslungsweise von innen mit Druck und Vakuum beaufschlagt wird. Dieses Wechselspiel erfolgt über die Klarlaufleitung mit Hilfe eines Dreiwegeventils und führt zu einem stoßweisen Auflockern des Filterkuchens auf der Filteraußenfläche.

Das bis zu Frequenzen der Vibration reichende Wechselspiel von Druck und Unterdruck bleibt jedoch im Gebrauch der Anlage nicht ohne stabilitätsmindernden Einfluß auf die Konstruktionselemente des Filters, insbes. der Flansche und Ventile sowie der Filteroberfläche, die entweder gelockert und damit undicht werden, oder teilweise erheblichen Beschädigungen unterliegen, was insbesondere das Stützgewebe oder die Perforation des aus Metall, Keramik oder Kunststoff bestehenden Grundkörper betrifft. Auch ist es kaum zu vermeiden, daß durch das Druck-Vakuum-Wechselspiel, das ja im Innern der Kerzen auftritt, die Perforation des Grundkörpers verstopft wird oder sogar Feststoff in den Innenraum (Klarraum) der Kerzen gelangt. Darüberhinaus ist ein vollständige Abtrennung des Filterkuchens von der Kerzenoberfläche vielfach ersts nach einem längeren Zeitraum des Druck-Unterdruck-Wechselspiels bei hohen Wechselamplituden möglich.

Durch das Verfahren gemäß der Erfindung, kann eine Filterkerze oder ein System von Filterkerzen derart in eine Filtrationsanlage integriert werden, daß ohne Anwendung von mechanisch bewegten Elementen wie Vibratoren usw., ohne Einwirkung großer Mengen Druckluft auf die Kerzenwände und ohne zeitraubendes und materialbeanspruchendes Wechselspiel von Über- und Unter-Druck innerhalb kürzester Zeiten eine vollkommene Abtrennung des Feststoffkuchens von der Außenfläche der Kerzen erreicht wird, und gleichzeitig der abgestoßene Kuchen bzw. das abgestoßene Kuchenmaterial in relativ hohem Trockenzustand anfällt.

Gegenstand der Erfindung ist demnach ein Verfahren zum Filtrieren von feste Verunreinigungen enthaltenden flüssigen Medien, wobei diese Medien (Trüben) ggf. zusammen mit einem Filterhilfsmittel durch die filtrierenden Oberflächen der Kerzen gedrückt und die klare Lösung gesammelt und abgeleitet wird, während die festen Verunreinigungen der Trübe auf der äußeren Oberfläche der Kerze als Filterkuchen verbleiben, der nach Erreichen einer Sollstärke bzw. in Abhängigkeit vom Druckverlust beim Durchtritt des flüssigen Mediums durch die Filterfläche abgetragen wird.

Bei dem Verfahren nach der Erfindung wird der die Filterkerze(n) aufnehmende Trübraum (Behälter) über ein schnell operierendes Schließelement an eine Vorlage angeschlossen und bei geschlossenem, den Trübraum und die Vorlage verbindendem Schließelement und im Anschluß an eine ggf. erfolgte Gleichstromwäsche des Filterkuchens in der Vorlage wird ein Unterdruck $P_2$ erzeugt, in dem Trübraum dagegen ein Überdruck $P_1$ aufgebaut, und in einem einmaligen Arbeitsgang erfolgt ein schockartiger, spontaner Druckausgleich zwischen $P_2$ und $P_1$ durch Öffnen des den Trübraum und die Vorlage verbindenden Schließelements, und die Temperatur im Trübraum wird so eingestellt ist, daß nach erfolgtem Druckausgleich der Gesamtdruck P unterhalb des Verdampfungspunkts des den Filterkuchen mit aufbauenden flüssigen Mediums (Trägerflüssigkeit) liegt.

Durch die spontan und schockartig erfolgende Entspannung zwischen dem Trübraum, der die Filterkerzen aufnimmt, und der durch das Schließelement von diesem getrennten Vorlage, d. h., durch den Druckausgleich von $P_2$ und $P_1$ auf den Gesamtdruck P — nach der Entspannung — kommt es zu einem schlagartigen Abplatzen des Filterkuchens von der Kerzenoberfläche, sodaß anschließend das Material des Filterkuchens in der Vorlage aufgefangen werden kann.

Der Sollwert für $P_2$ — in der Vorlage — und $P_1$ — im Trübraum — richtet sich selbstverständlich nach dem Material des Filterkuchens und des in diesem enthaltenden flüssigen Mediums (Trägerflüssigkeit), wobei dessen Verdampfungsparameter (Druck und Temperatur) auch die Sollwerte $P_2$ bzw. $P_1$ bestimmen.

Ohne daß hier definierte Zahlenangaben gegeben werden können, weil diese eine Funktion des im Filterkuchens enthaltenden Mediums darstellen, haben Versuche ergeben, daß die Differenz $\Delta P = P_1 - P_2$ vor der spontanen Entspannung bzw. Druckausgleich bei etwa 0,05 bis 12,5 bar liegt, d. h., daß im Extremfall die Vorlage einen Druck von 0,05 bar und der Trübraum einen solchen von 12,5 bar aufweisen.

Entscheidend für die Durchführbarkeit der Erfindung ist somit die Bedingung, daß der Druck in der Vorlage (Auffangbehälter für das Filterkuchenmaterial) auf einen Wert eingestellt wird, der wesentlich unter dem Verdampfungs-

druck des flüssigen Medium (Trägerflüssigkeit) der Trübe liegt. Diese Forderung muß auch nach dem Druckausgleich zwischen Trübraum und Vorlage bestehen bleiben. Hierdurch bedingt erfolgt die spontane Abstoßung des Filterkuchens von der Kerzenoberfläche in Verbindung mit einer sogenannten Flash-Verdampfung des flüssigen, im Filterkuchen enthaltenden Mediums (Trägerflüssigkeit), wodurch der Kuchen aufgerissen und nach dem Absprengen von der Filteroberfläche in kleine Partikel zerfällt. Diese sammeln sich anschließend in der Vorlage, nachdem sie das Schließelement, das Vorlage und Trübraum verbindet, passiert haben.

Der spontane Druckausgleich zwischen $P_2$ und $P_1$ auf den Entspannungsdruck $P_3$ erfolgt, wie bereits gesagt, schlagartig, d. h., es wird das zwischen Vorlage und Trübraum eingebaute Verschlußelement (Ventil, Schieber etc.) schlagartig, d. h. kurzfristig geöffnet. Hierdurch tritt ein spontaner Druckabfall an der Oberfläche des Filterkuchens ein, wobei in Verbindung mit der herrschenden Temperatur das Ausdampfen des flüssigen Mediums im Filterkuchen erfolgt.

Der Enddruck nach dem Druckausgleich ist natürlich auch eine Funktion der Volumina von Vorlage und Trübraum.

Es hat sich überraschenderweise gezeigt, daß beim Arbeiten gemäß den Vorschlägen der Erfindung, d. h., nach dem Druckausgleich und dem damit verbundenen schlagartigen Abplatzen des Filterkuchens die Oberfläche der Filterkerze(n) praktisch vollkommen blank ist, sodaß nach Verschließen des die Vorlage und den Trübraum verbindenden Schließelements die Filtereinheit sofort für den nächsten Filtrationsvorgang wieder eingesetzt werden kann.

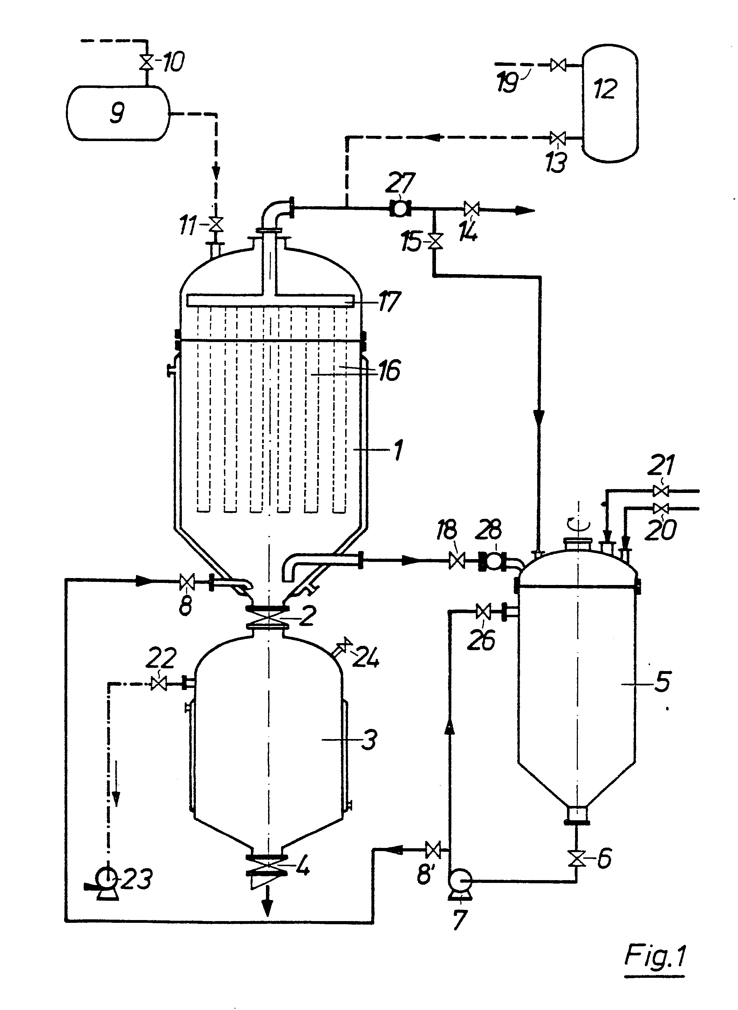

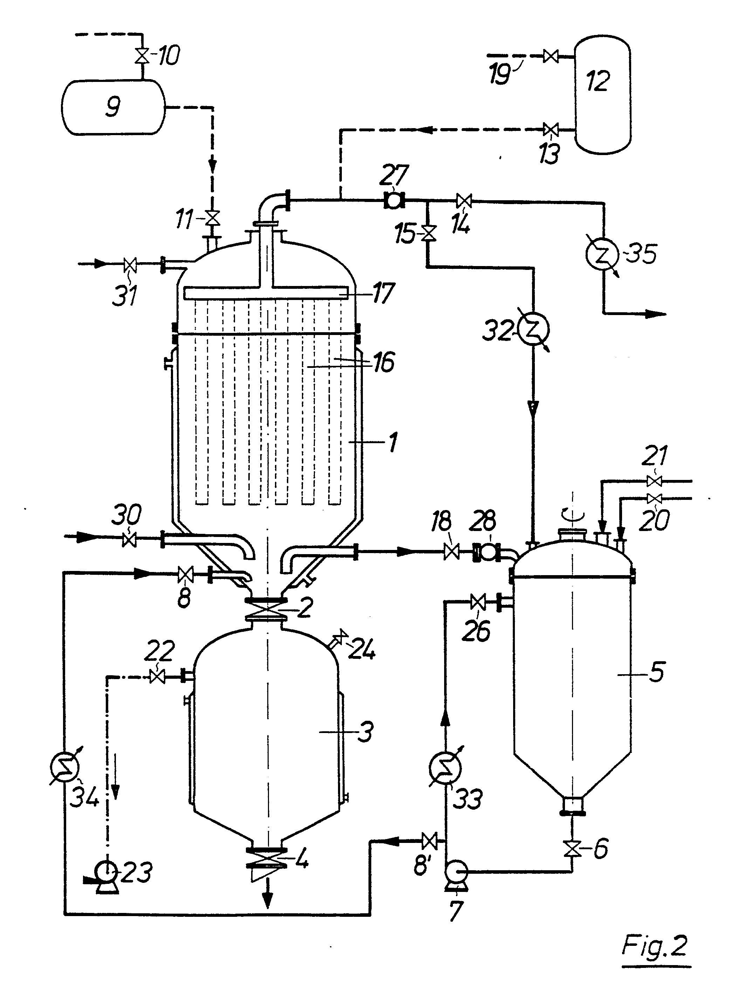

Die Erfindung betrifft weiter eine Vorrichtung zur Durchführung des vorstehend beschriebenen Verfahrens zur Reinigung von Filterelementen, insbesondere von Filterkerzen. Diese Anlage wird zunächst in Verbindung mit Figur 1 beschrieben, während Figur 2 eine weitere Ausgestaltung zeigt, die sich insbesondere für solche Trüben bewährt hat, deren Trägerflüssigkeit (flüssiges Medium) aus einem niedrig siedenden organischen Lösemittel wie niedrige Kohlenwasserstoffe, Alkohole usw. besteht.

Schwerpunkt der Vorrichtung bildet der eigentliche Filterkessel (Trübraum) 1 mit über ein Schnellschlußelement 2 angeschlossener Vorlage 3, die den nach Druckausgleich von der Filteroberfläche abgesprengten Filterkuchen aufnimmt.

Im laufenden Betrieb wird zunächst die zu filtrierende Trübe über Leitung bzw. Ventil 20 in eine Mischvorlage 5 eingebracht, wo sie ggf. mit einem Filterhilfsmittel über Leitung 21 vermischt wird. Bei geöffneten Ventilen 6, 26 und geschlossenem Ventil 8' wird Pumpe 7 in Betrieb gesetzt und die Trübe bzw. die Suspension aus Trübe und Filterhilfsmittel in der Mischvorlage 5 zwecks Homogenisierung umgewälzt. Ggf. ist die Mischvorlage 5 mit einem Rührwerk ausgestattet.

Sobald ausreichende Homogenität in 5 vorliegt, wird das Ventil 26 geschlossen und Ventil 8' geöffnet und die Suspension aus Trübe und Filterhilsmittel aus 5 über 8', 8 bei geschlossenen Ventilen 2, 18, 11, 13, 14 und geöffnetem Ventil 15 durch den Druck der Pumpe 7 in den Trübraum 1 — im folgenden mit Filterkessel bezeichnet — gedrückt. Die Trübe passiert weiter unter dem vorhandenen Pumpendruck die Filterelemente 16', wobei sich ein Filterkuchen auf der Außenfläche der Filterelemente 16 ausbildet.

Klares Filtrat gelangt über ein Sammelrohr 17 und Ventil 15 zurück in die Mischvorlage 5. Die Umwälzung der Trübe bzw. des Filtrats wird solange fortgesetzt, bis sich im Schauglas 27 ein absolut feststofffreier bzw. klarer Ablauf zeigt. Der Anschwemmvorgang ist nun beendet.

Bei weiterhin geschlossenen Ventilen 2, 4, 24 wird nun eine Vakuumpumpe oder ein anderes, Unterdruck erzeugendes System 23 wie etwa ein Dampfstrahler usw. in Betrieb gesetzt und die Vorlage 3 bei geöffnetem Ventil 22 auf beispielsweise 0,05 bar evakuiert. Dieser Druck ist hier nur beispielhaft zu werten und stellt — wie eingangs bereits gesagt — eine Funktion verschiedener Faktoren wie etwa das Siedeverhalten der Flüssigkeit im Filterkuchen, der effektive Druck im Filterkessel 1, das Volumen von Kessel 1 und Vorlage 3 usw. dar.

Sobald der erforderliche Unterdruck erreicht ist, wird Ventil 22 geschlossen und das System 23 abgestellt.

Hat der Kuchen auf den Filterkerzen 16 eine gewisse, betriebsbedingte Stärke erreicht oder ist aus andern Gründen erkennbar, daß die Filtrationseffizienz nachläßt (Druckabfall), so müßen die Kerzen gereinigt bzw. die gebildeten Kuchen von den Kerzenoberflächen abgetrennt werden.

Hierzu wird zunächst über Ventil 10 ein Druckgasbehälter 9 mit einem geeigneten Druckgas (Druckluft, Inertgas, Wasserdampf usw.) gefüllt. Dieser Vorgang erübrigt sich, sofern betriebliche Leitungen für Gase dieser Art vorhanden sind.

Ventil 8 wird geschlossen und die Ventile 26, 18, 11 geöffnet. Hierdurch wird der im Filterkessel 1 noch vorhandene Restanteil an Trübe bzw. Filtrat in den Mischkessel 5 rückentleert. Am Schauglas 28 kann visuell beobachtet werden, wann dieser Rückentleerungsprozess beendet ist.

Jetzt wird Ventil 18 geschlossen, ebenso Ventil 15 und über den Gasbehälter 9 im System 1, 16, 17, 12 — Ventile 19 und 11 sind ebenfalls geschlossen — ein Überdruck aufgebaut, der z. B. 3 bar absolut beträgt.

Vorteilhafterweise wurde vorher — bei Wasser als Trägerflüssigkeit bzw. flüssigem Medium — der Filterkessel 1 über Ventile 10, 11 und Behälter 9 mit Wasserdampf leer gedrückt, wobei die Resttrübe über Ventil 18 und Schauglas 28 in den Mischkessel 5 zurückfließt.

Ebenfalls erfolgt der Druckaufbau in 1, 16, 17, 12 beispielsweise durch Wasserdampf im Behälter 9 bzw. über die Elemente 10, 9, 11.

Bei besagtem Unterdruck von 0,05 bar in der Vorlage 3 und 3 bar absolut in 1 genügt beispielsweise eine Temperatur von ca. 35 °C um aus dem Filterkessel 1 eine spontane Entspannung in die Vorlage 3 zu erreichen.

Beispiel

Bei der Filtration einer wässrigen Trübe von organischen Stoffen, im speziellen Falle eines industriellen Abwassers, wird ein Filterkessel 1 von 1 m³ Volumen und eine Vorlage 3 von 3 m³ Volumen verwendet. Restluft wurde in der Vorlage 3 über Ventil 24 durch Wasserdampf ersetzt und gleichzeitig der Druck in 3 auf 0,05 bar abgesenkt. Dies bedeutet, daß in der Vorlage 3 beim angegebenen Druck eine Atmosphäre aus reinem Wasserdampf vorliegt (Ventile 2 und 4 selbstverständlich verschlossen). Nachdem auch Behälter 1 wie bereits gesagt durch Wasserdampf über 10, 9, 11 leer gedrückt ist — Trübenablauf über Ventil 18 in den Mischkessel 5 — wird im Filterkessel 1 ein Überdruck von 3 bar absolut eingestellt, sodaß im Filterkessel 1 ca. 1,65 kg Wasserdampf, in der Vorlage 3 dagegen nur ca. 100 g Wasserdampf vorhanden sind.

Nach Öffnen des Verschlußelements 2 und damit erfolgendem Druckausgleich zwischen 1 und 3 befinden sich im Gesamtsystem von ca. 4 m³ Volumen ca. 1,750 kg Wasserdampf bzw. pro m³ 0,44 kg Wasserdampf (ggf. noch vorhandene Luft kann vernachlässigt werden).

Reziprok ergibt ein Wert von 0,44 kg Wasserdampf pro m³ Ausgleichsvolumen ca. 2,27 m³ pro kg Wasserdampf. Dies entspricht einem abgesenkten Druck von ca. 0,95 bar absolut.

Der Unterschied in der Sattdampftemperatur von 3 bar absolut (im Filterkessel vor der Entspannung) zu 0,95 bar absolut (im System 1, 2, 3 nach der Entspannung) beträgt ca. 35 °C, die für die sogenannte Flash-Verdampfung des Wassers im Filterkuchen zur Verfügung stehen. Unter diesen Bedingungen platzt dieser spontan ab, das Wasser verdampft und das Kuchenmaterial sammelt sich in relativ trockenem Zustand in der Vorlage 3.

Bei dem Verfahren nach der Erfindung sind es somit insbesondere zwei Faktoren, die die schnelle Abtrennung des Filterkuchens ermöglichen. Einmal ist dies die Flash-Verdampfung der im Filterkuchen enthaltenden Flüssigkeit, die den Kuchen aufreist bzw. Teile davon mitreisst, und zum andern der spontane Druckausgleich bzw. Entspannung vom Innern der Filterkerzen durch den Filterkuchen in Richtung Filterkessel bzw. Vorlage, da ja während der spontanen Entspannung bzw. Druckausgleich zwischen 1 und 3 der Bereich der Filterkerzen 16, Sammelrohr 17 und ggf. Behälter 12 in diesen Prozess einbezogen sind.

Die Abtrennung des Kuchens auf den Kerzen 16 erfolgt mit größter Geschwindigkeit, sodaß das Kuchenmaterial regelrecht abplatzt. Dabei findet gleichzeitig ein Trocknungsprozess statt bedingt durch die Verdampfung der Trägerflüssigkeit bzw. Restfeuchtigkeit aus dem Kuchenmaterial.

Nach erfolgtem Druckausgleich zwischen dem System 1, 16, 17, 12 einerseits und der Vorlage 3 andererseits sammelt sich das relativ trockene Filterkuchenmaterial in der Vorlage 3, von wo es über Ventil 4 abgezogen werden kann.

Inzwischen kann bereits mit dem nächsten Filtrationsvorgang begonnen werden.

Während dieser abläuft, wird der Kessel bzw. die Vorlage 3 aufbereitet, was zunächst durch Belüftung über das Ventil 24 erfolgt. Der in 3 angesammelte Kuchen bzw. das Kuchenmaterial wird ausgetragen wozu ggf. eine — nicht gezeigte — Wäsche der Vorlage 3 — Spülung usw. — dienlich ist. Nach Verschließen der Ventile 2, 24, 4 ist auch die Vorlage für den nächsten Arbeitsgang vorbereitet.

Die vorstehend beschriebene Arbeitsweise des erfindungsgemäßen Verfahrens ist in Fig. 1 nur in seinen allgemeinen Bau- und Apparateelementen wiedergegeben.

Insbesondere hat sich das Verfahren bei solchen Filtrationsprozessen bewährt, deren Trübstoffe sehr feinkörniger und schleimiger Natur sind und nach der Kuchenausbildung relativ fest und kompakt auf der Filteroberfläche haften.

Ein Beispiel hierfür ist u. a. die Filtration von Miscella der Öl- und Fettextraktion aus Saatgut wie Soja, Raps, Sonnenblumen usw., die aus ca. 25 % Fettsäuren bzw. Ölen und ca. 75 % Extraktions- oder Lösemittel wie Benzin, Hexan usw. besteht.

Die Natur der Trübstoffe macht die Blankfiltration derartiger Miscella besonders schwierig, obwohl der Anteil der Trübstoffe relativ niedrig ist. Der hohe Schleimanteil und die geringe Partikelgröße führt zu einem schlammartigen Filterkuchen, der vielfach nur durch Ausbau der Kerzen nach jedem Filtervorgang oder durch Verwendung mechanischer Reinigungselemente optimal entfernt werden kann.

Hier hat sich das Verfahren nach der Erfindung besonders bewährt wobei nicht nur eine absolut blanke Miscella erhalten wird — weil die Oberfläche der Kerzen nach der Reinigung durch die Maßnahmen der Erfindung keine Restanteile des Filterkuchens mehr aufweist — sondern es wird — und dies ist bisher nur mit den Maßnahmen der Erfindung möglich — auch eine vollkommene Abtragung des auf eine Stärke von 3-8 mm angewachsenen Filterkuchens bei gleichzeitig erfolgendem optimalen Trocknungsprozess des Kuchenmaterials durch einmalige Entspannung erreicht.

Der Einsatz von Hochdruckluft, von Vibrationselementen, von mechanischen Reinigungswerkzeugen oder sogar der Ausbau der Kerzen zwecks Reinigung wird hierdurch eliminiert.

Bei der Filtration vorstehend definierter Miscella der Öl-Extraktion mit Hilfe organischer Lösemittel enthält der Filterkuchen auf der Oberfläche der Filterkerzen im allgemeinen noch ca. 50 % Flüssigkeitsanteil (Miscella), also ein Gemisch aus Fettsäuren bzw. Ölen und Lösemittel. Der Rest des Kuchens baut sich auf aus Trübmaterial und Filterhilfsmittel.

Um in diesem Falle das wertvolle Öl — und das Lösemittel — optimal zurückzugewinnen, hat sich ein Verfahren bewährt, das anhand von Fig. 2 näher beschrieben wird. Dabei wird zunächst bei geschlossenen Ventilen 2 und 18 über geöffnetem Ventil 30 frisches Lösemittel (also Lösemittel, das dem Lösemittel der zu filtrierenden Miscella entspricht, und das auch im Filterkuchen enthalten ist) in den Filterkessel 1 gedrückt und der Kuchen auf den Kerzenfiltern 16 — nach Beendigung der Miscella-Filtration bzw. nach beendetem Aufbau des Filterkuchens — mit Hilfe dieses frischen Lösemittels, beispielsweise Hexan, gewaschen, sodaß eine bestimmte Menge des im Filterkuchens enthaltenden Öls aus diesem heraus extrahiert wird.

Das über 30 eingespeiste zusätzliche Lösemittel einschließlich des durch dieses aus dem Filterkuchen herausgelösten Öls gelangt über das Sammelrohr 17 und Ventile 14, 15 entweder zur Miscella-Aufbereitung oder es wird im Mischkessel 5 angesammelt.

Im speziellen Falle der Miscellafiltration ist es weiterhin zweckmäßig, den Filterkuchen vor der Abtrennung mit Hilfe von Wasserdampf auszudämpfen, wozu Wasserdampf beispielsweise über Leitung bzw. Ventil 31 in den Filterkessel eingeführt wird. Durch diese Maßnahme gelingt es, einen erheblichen Anteil des im Filterkuchen auf den Kerzen 16 vorhandenen Lösemittels, beispielsweise Hexan, auszutreiben und nach erfolgter Kondensation in einem der Kondensatoren 32, 35 zu gewinnen. Dabei wird je nach Verfahrensprinzip das Kondensat Lösemittel/Wasser (und ggf. Öl) als solches über Kondensator 35 oder zum Filtrationsgemisch in 5 über Kondensator 32 aufgefangen.

Wie Fig. 2 weiter zeigt, ist es vorteilhaft, sowohl den Kreislauf 5, 6, 7, 26 als auch die Beschickungsleitung 5, 6, 7, 8', 8 mit je einem Wärmeaustauscher 33, 34 auszurüsten, um bei der späteren Entspannung vom Filterkessel 1 in die Vorlage 3 über das Schnellschließelement 2 ein für die Verdampfung des im Filterkuchen eingeschlossenen flüssigen Mediums ausreichendes Temperaturgefälle zu erzielen.

So beträgt z. B. bei einer Miscellatemperatur von 70 °C — aus dem Mischbehälter 5 über Pumpe 7 und Austauscher 34 — die Verdampfungstemperatur von Hexan als Lösemittel — und Flüssigkeit im Filterkuchen — bei ca. 0,4-0,6 bar nur noch 55 °C. Dies bedeutet, daß ein ca. 70 °C heißer Filterkuchen bei einer Druckentspannung (von 1 über 2 nach 3) auf 0,4 bis 0,6 bar Ausgleichsdruck zur sofortigen und spontanen Verdampfung des Hexans aus dem Kuchen heraus führt und dabei den Kuchen schlagartig von der Kerzenoberfläche absprengt.

Es versteht sich, daß durch eine geeignete Automatik, die für eine moderne Verfahrenstechnik obligatorisch ist, der gesamte Prozess aus Filtration und Abtrennung des Filterkuchens vollautomatisch geregelt bzw. gesteuert werden kann. Obwohl sich Einzelheiten hierzu erübrigen, sei erwähnt, daß in einer bestehenden Anlage die Ventile 2, 4 als Hochvakuum-Schnellschieber, als

Ventilklappen, als Kugelventile usw. ausgebildet sind, deren Arbeitstakte (Öffnen und Schließen) innerhalb Bruchteile von Sekunden ablaufen können, um den Effekt der erforderlichen Spontanität des Druckausgleichs zwischen 1 und 3 zu erreichen.

Weiter kann die optimale Filtrationszeit über den Anstieg des Pumpendrucks in 7 einem Regelschema unterworfen werden, sodaß ein zeitliches Arbeitsdiagramm den gesamten Ablauf steuert. Ggf. kann der im System 1, 16, 17, 12 sich aufbauende Überdruck bei der Abtrennung des Filterkuchens auf den Kerzen 16 zusätzlich durch Inertgas oder Dampf über 19 und Druckbehälter 12 eingestellt werden. Die Schaugläser 27, 28 können selbstverständlich durch bekannte, beispielsweise optische Geräte für die Trübemessung ersetzt werden usw.

Ganz allgemein läßt sich der Gesamtablauf von Filtration, Filterkuchenabtrennung durch Entspannung bzw. Druckausgleich zwischen Filterkessel 1 und Vorlage 3 und erneute Filtration vollkommen automatisch gestalten.

## Patentansprüche

1. Verfahren zum Filtrieren von festen Verunreinigungen aus einer Flüssigkeit, insbesondere Schwebstoffe enthaltende Lösungen in organischen, polaren und nichtpolaren Lösemitteln, wobei die Trübe, ggf. zusammen mit einem Filterhilfsmittel über Filterkerzen geschickt und die klare Lösung nach Durchgang durch die Filterkerzen gesammelt und abgeleitet wird, während die festen Verunreinigungen auf der äußeren Oberfläche der Filterkerzen unter Ausbildung eines Filterkuchens verbleiben, der nach Erreichen einer Sollstärke oder in Abhängigkeit vom Druckverlust in der Zufuhrleitung zu den Filterkerzen von diesen abgenommen wird, dadurch gekennzeichnet, daß zur Entfernung des Filterkuchens der die Filterkerzen aufnehmende Behälter über ein schnell operierendes Schließelement an eine Vorlage angeschlossen wird, daß bei geschlossenem Schließelement in der Vorlage ein Unterdruck $P_2$ erzeugt wird, daß in dem die Filterkerzen aufnehmenden Behälter gleichzeitig ein Überdruck $P_1$ aufgebaut wird, und daß in einem einmaligen Arbeitsgang ein spontaner Druckausgleich zwischen $P_1$ und $P_2$ durch Öffnen des die Vorlage und den Filterkerzenbehälter verbindenden Schließelements erfolgt, daß die Temperatur im Filterbehälter so geregelt ist, daß durch die Kombination von spontanem Druckausgleich und Verdampfung des im Filterkuchens vorhandenen Lösemittel ein Abplatzen des Filterkuchens von der Kerzenoberfläche erfolgt und der Filterkuchen in der Vorlage aufgefangen wird und daß der Druck $P_2$ auf einen unterhalb dem Verdampfungsdruck der im Filterkuchen eingeschlossenen Flüssigkeit liegende Wert derart eingestellt wird, daß ein Abplatzen des Filterkuchens eintritt, daß auch nach erfolgtem Druckausgleich der Druck $P_3$ einen Wert aufweist,

der unterhalb dem Verdampfungsdruck der im Filterkuchen eingeschlossenen Flüssigkeit liegt und daß die Temperatur der im Filterkuchen enthaltenden Flüssigkeit im Augenblick des spontanen Druckausgleichs zwischen $P_1$ und $P_2$ auf einen Wert eingestellt ist, der unterhalb der Verdampfungstemperatur der im Filterkuchen enthaltenden Flüssigkeit liegt.

2. Verfahren nach Anspruch 1, dadurch gekennzeichnet, daß der auf den Kerzen liegende Filterkuchen vor der Abtrennung im Gegenstrom, d. h. von außen nach innen, bezogen auf die Kerzen, mit einer Flüssigkeit, insbesondere mit einem Lösemittel gewaschen wird, die auch Bestandteil des Filterkuchens ist.

3. Verfahren nach Anspruch 2, dadurch gekennzeichnet, daß der Filterkuchen vor der Abtrennung und nach dem Waschvorgang im Gegenstrom, d. h. von außen nach innen, bezogen auf die Kerzen, mit einem Gas, insbesondere Wasserdampf, ausgedämpft wird.

4. Verwendung des Verfahrens nach Ansprüchen 1 bis 3 zur Filtration von Trübstoffe enthaltender Miscella aus der Ölextraktion.

5. Vorrichtung zur Durchführung des Verfahrens nach Ansprüchen 1 bis 4, gekennzeichnet durch einen Filterelemente (16) aufnehmenden Filterkessel (1) ; einem schnell schließenden und öffnenden Element (2), das die Verbindung zu einem Vorlagekessel (3) bildet ; einem Druckaufbausystem für den Filterkessel (1), bestehend aus einem Druckgaskessel (9) und einem Regelventil (11) ; einem Vakuum bzw. Unterdruck aufbauenden System (23) für den Vorlagekessel (3), und durch ein Umwälzsystem für Trübe und Filtrat, bestehend aus einer Mischvorlage (5), einer nachgeschalteten Umwälz- und Förderpumpe (7), einer die Pumpe (7) mit dem Filterkessel (1) verbindenden Leitung mit Ventilen (8, 8') und aus einer den Filterkessel (1) mit einer Mischvorlage (5) verbindenden Leitung mit Ventil (15).

6. Vorrichtung nach Anspruch 5, gekennzeichnet durch beheizbare Filterkessel (1) und Vorlagekessel (3) sowie Kondensatoren (32, 35) in den Filtratablaufleitungen und Wärmeaustauscher (33, 34) in den Trübe-Kreislauf- und Beschickungsleitungen, ausgehend vom Mischkessel (5).

## Claims

1. Process for filtering solid impurities from a liquid, particularly solutions containing suspended matters, in organic, polar and non-polar solvents, whereby the turbidity is optionally added through filter cartridges together with a filter auxiliary and the pure solution is, after having passed the filter cartridges, collected and drawn off, whereas the solid impurities are retained on the outer surface of the filter cartridges by building up a filter cake which, after reaching a nominal thickness or by depending on a pressure drop in the supply pipe to the filter cartridges, is discharged from the same, characterized in that for the removal of the filter cake the container holding the filter cartridges is connected to a receiver through a quickly operating locking element, that with a closed locking element an underpressure $P_1$ is generated in the receiver, that at the same time an overpressure $P_2$ is built up in the containner holding the filter cartridges, and that taking place in a single pass a spontaneous pressure between $P_1$ and $P_2$ is caused by opening the locking element connecting the receiver with the container of the filter cartridges, that the temperature in the filter container is adjusted so that in consequence of the combination of spontaneous pressure release and evaporation of the solvent in the filter cake a bursting off of the filter cake from the cartridge surface is caused and the filter cake is collected in the receiver, and that the pressure $P_2$ is adjusted to a value lower than that of the evaporation pressure of the liquid contained in the filter cake, in a way, that a bursting off of the filter cake occurs, that also affer a accomplished pressure release pressure $P_3$ shows a value lying below that of the evaporation pressure of the liquid contained in the filter cake, and that the temperature of the liquid contained in the filter cake is, at the moment of the spontaneous pressure release between $P_1$ and $P_2$, adjusted to a value lying below the evaporation temperature of the liquid contained in the filter cake.

2. Method according to claim 1 characterized in that the filter cake on the filter cartridges is washed with a liquid, particularly with a solvent that is also a component of the filter cake, before the separation in the countercurrent, i. e. from the outside to the inside, with regard to the cartridges.

3. Method according to claim 2 characterized in that the filter cake is dried with a gas, particularly water vapor, prior to the separation and after the washing in the countercurrent i. e. from the outside to the inside with regard to the cartridges.

4. Use of the method according to claims 1 to 3 for filtration of miscella containing turbid substances from the oil extraction.

5. Apparatus for carrying through the method according to claims 1 to 4 characterized by a filtering vessel (1) taking up filter elements (16) ; a quickly locking and opening element (2), which constitutes the connection to a receiver vessel (3) ; a pressure build-up system for the filtering vessel (1) consisting of a pressure gas vessel (9) and a control valve (11) ; a system building up a vacuum or an underpressure (23) for the receiver (3) ; and by a circulation system for the turbid substance and the filtrate consisting of a mixing receiver (5), a topped circulation and feed pump (7), a pipe connecting pump (7) with the filtering vessel (1) and containing the valves (8, 8) and of a pipe with the valve (15) connecting the filtering vessel (1) with a mixing receiver (5).

6. Apparatus according to claim 5 characterized through a heatable filtering vessel (1) and a receiver (3) as well as capacitors (32, 35) in the filtrate discharge pipes and heat exchanger (33, 34) in the turbid substance-circulation and supply pipes proceeding from the mixing vessel (5).

## Revendications

1. Procédé pour éliminer par filtration des impuretés solides d'un liquide, en particulier des particules en suspension dans une solution à base d'un solvant organique, polaire ou non polaire, procédé selon lequel on envoie la suspension sur des bougies filtrantes, éventuellement avec un adjuvant de filtration, on rassemble la solution claire qui a traversé les bougies filtrantes et on l'évacue, pendant que les impuretés solides restent sur la surface extérieure des bougies filtrantes sous la forme d'un gâteau de filtration qui est enlevé desdites bougies lorsqu'il a atteint une certaine épaisseur ou en fonction de la perte de charge dans le conduit d'amenée aux bougies filtrantes, caractérisé en ce que, pour l'enlèvement du gâteau de filtration, on relie le récipient contenant les bougies filtrantes à un collecteur à travers un obturateur à manœuvre rapide, en ce que le collecteur est soumis à une dépression $P_2$ quand l'obturateur est fermé, en ce qu'une surpression $P_1$ règne au même moment dans le récipient contenant les bougies filtrantes, et en ce que, dans un processus opératoire à une seule étape, les pressions $P_1$ et $P_2$ s'égalisent spontanément sous l'effet de l'ouverture de l'obturateur reliant le collecteur au récipient à bougies filtrantes ; en ce que la température dans le récipient à bougies filtrantes est régulée de telle façon que la combinaison de l'égalisation spontanée des pressions et de la vaporisation du solvant contenu dans le gâteau de filtration a pour conséquence que le gâteau de filtration se détache de la surface extérieure des bougies filtrantes et est recueilli dans le collecteur ; en ce que la pression $P_2$ est maintenue à une valeur inférieure à la pression de vaporisation du liquide contenu dans le gâteau de filtration, de façon à obtenir le détachement de celui-ci ; en ce que la pression $P_3$ atteinte après l'égalisation des pressions a une valeur inférieure à la pression de vaporisation du liquide contenu dans le gâteau de filtration ; et en ce que la température du liquide contenu dans le gâteau de filtration à l'instant de l'égalisation spontanée des pressions $P_1$ et $P_2$ est fixée à une valeur inférieure à la température de vaporisation de ce liquide.

2. Procédé selon la revendication 1, caractérisé en ce qu'on lave le gâteau de filtration reposant sur les bougies, avant de le séparer, en sens inverse, c'est-à-dire en allant de l'extérieur vers l'intérieur en considérant les bougies avec un liquide, en particulier d'un solvant qui fera partie du gâteau de filtration.

3. Procédé selon la revendication 2, caractérisé en ce que, avant de séparer le gâteau de filtration, mais après l'avoir lavé, on le soumet à une évaporation en sens inverse, c'est-à-dire en allant de l'extérieur vers l'intérieur en considérant les bougies filtrantes, avec un gaz, en particulier de la vapeur d'eau.

4. Application du procédé selon l'une des revendications 1 à 3 à l'extraction par filtration de miscella contenant des particules de suspension provenant de l'extraction d'huiles.

5. Dispositif pour la mise en œuvre du procédé selon l'une des revendications 1 à 4, caractérisé par un caisson de filtration (1) contenant des éléments filtrants (16) ; un organe à ouverture et fermeture rapide (2) reliant ce caisson à un caisson de collecte (3) ; un système de pressurisation du caisson de filtration (1), comprenant un réservoir à gaz comprimé (9) et une vanne de régulation (11) ; un système de mise sous vide ou en dépression du caisson de collecte (3) ; un système de circuit fermé pour la suspension et le filtrant, comportant un récipient de mélange (5) une pompe (7) de circulation et alimentation placée en aval, un conduit reliant la pompe (7) au caisson de filtration (1) et pourvu de vannes (8, 8'), et un conduit reliant le caisson de filtration (1) au récipient de mélange (5), avec une vanne (15).

6. Dispositif selon la revendication 5, caractérisé par un caisson de filtration (1) et un caisson de collecte (3) chauffables, et des condensateurs (32, 35) dans les conduits d'évacuation du filtrant, et des échangeurs de chaleur (33, 34) dans les conduits de circuit fermé et d'alimentation de la suspension sortant du récipient de mélange (5).

Fig.1

Fig.2